# EUROPEAN PATENT APPLICATION

(11) **EP 4 177 365 A1**
(43) Date of publication of application: **10.05.2023**
(21) Application number: 21306559.2
(22) Date of filing: 05.11.2021
(51) Int. Cl.: C22B 59/00, C22B 3/16, C22B 7/00, C22B 3/44

(54) **A GREEN PROCESS FOR THE EXTRACTION OF LANTHANIDE ELEMENTS**

(71) Applicant: Commissariat à l'Energie Atomique et aux Energies Alternatives, 75015 Paris (FR); Centre national de la recherche scientifique, 75016 Paris (FR); Université de Montpellier, 34090 Montpellier (FR); Ecole Nationale Supérieure de Chimie de Montpellier, 34090 Montpellier (FR)
(72) Inventor: ZEMB, Thomas, 30207 Bagnols-sur-Cèze Cedex (FR); EL MAANGAR, Asmae, 30207 Bagnols-sur-Cèze Cedex (FR); PELLET-ROSTAING, Stéphane, 30207 Bagnols-sur-Cèze Cedex (FR)
(74) Representative: IPAZ

(57) **Abstract**

The present invention relates to a method for extracting at least one lanthanide element, preferably selected from lanthanum (La), praseodymium (Pr), neodymium (Nd), europium (Eu), dysprosium (Dy), and ytterbium (Yb), from a solid material comprising said lanthanide element, one or more waste elements such as iron (Fe), and/or one or more other lanthanide elements, the method implementing a composition comprising water, at least one organic aprotic solvent, and at least one charged hydrotrope, and the use of said composition for recycling lanthanide elements, and more particularly WEEE, and for the decontamination of effluents.

## Description

The present invention relates to a method for extracting at least one lanthanide element, preferably selected from lanthanum (La), praseodymium (Pr), neodymium (Nd), europium (Eu), dysprosium (Dy), and ytterbium (Yb), from a solid material comprising said lanthanide element, one or more waste elements such as iron (Fe), and/or one or more other lanthanide elements, the method implementing a composition comprising water, at least one organic aprotic solvent, and at least one charged hydrotrope, and the use of said composition for recycling lanthanide elements, and more particularly WEEE, and for the decontamination of effluents.

The invention deals more particularly, but not exclusively, with the recycling of permanent magnets from electrical and electronic waste (WEEE).

Rare earths are a group of metals that are characterized by similar properties, namely scandium (Sc), yttrium (Y) and all the lanthanides, the latter corresponding to the 15 chemical elements listed in the periodic table of elements of Mendeleev, which have an atomic number ranging from 57 for lanthanum (La) to 71 for lutetium (Lu).

The properties of rare earths elements (REEs) are related to their particular electronic configuration and, in particular, to their unsaturated 4f electronic sublayer, which gives them unique chemical, structural and physical properties. These properties are used in a wide range of sophisticated industrial applications such as metallurgy, catalysis, glass, optics, ceramics, luminescence, magnetism, electronics, etc. Many applications are highly dependent on the physical properties of REEs. They are particularly indispensable in applications related to green energy technologies such as wind turbines and electric vehicle batteries. They are also used in most consumer electronic devices such as computers and household appliances. REEs are therefore included in the so-called group of "technological" metals whose vital importance grows with the technological evolution and supply is strategic.

However, REEs are threatened by the growth in global demand for these particular metals. Moreover, REEs are considered as critical metals in European countries, as these countries have few primary deposits of these elements. Therefore, due to the high economic importance of REEs and the risks associated with their supply, the European Commission designated REEs as critical elements in 2010.

As rare earths are used in the manufacture of many technological equipments, industrial and domestic waste from these equipments and, in particular, from electrical and electronic equipment, also known as WEEE, represents a source of access to rare earths which can compensate, at least partially, the lack of REE resources in European countries. The treatment of this waste with the aim of selectively recovering the rare earths has therefore received considerable attention.

This electrical and electronic waste comes from the urban mine, i.e., from the collection of post-consumer waste, or is industrial waste. Permanent magnets represent the application that consumes the largest tonnage of REEs and generates the highest market value. They are found in wind turbine generators, computer hard drives, air conditioner compressors, etc. The NdFeB type magnet is the most widely used type of REEs magnet due to its high magnetic performance. These magnets contain the following REEs: neodymium (Nd), praseodymium (Pr) and dysprosium (Dy), to which scandium, cerium, lanthanum, gadolinium ... are sometimes added. They also contain boron, iron and some transition metals such as cobalt, aluminum, copper, titanium, chromium, vanadium, and/or nickel. In these magnets, the total content of the first three elements is about 30%, which is much higher than the content contained in natural ores of REEs.

Various methods of recycling REEs from NdFeB permanent magnets have been studied. These methods can be categorized as direct reuse, decrepitation, pyrometallurgical methods, hydrometallurgical methods and solvometallurgical methods, or a combination of them. Some of them are described in Yang et al., 2017, J. Sustain. Metall., 3, 122-149.

Particular attention has been paid to an hydrometallurgical treatment involving oxidative roasting of NdFeB magnets by treatment of said NdFeB magnets at 950°C under atmospheric conditions, leaching (dissolving) of roasted NdFeB magnets in hydrochloric acid (1.7 M) so as to remove Fe, and then separating the metal cations in the leachate by liquid-liquid extraction technique using trihexyl(tetradecyl)phosphonium chloride ionic liquid in order to remove Co, and by precipitation through addition of oxalic acid to the leachates and heat treatment of the oxalates to generate mixed oxides of REEs that can be reused in the production of NdFeB magnets. The interest of the oxidative roasting is to improve the recovery selectivity of REEs (Nd and Dy), towards Fe during the leaching process. In addition to improving the selectivity of the process, the oxidative roasting of the magnets also allows to limit the generation of hydrogen during the leaching process.

However, it is also beneficial to separate REEs from each other, in order to obtain high purity REEs, or their oxides. For example, didymium (a mixture of Nd and Pr) and Dy have a high market value and are highly valuable. Indeed, Dy₂O₃ is used in many applications. Examples include the production of NdFeB permanent magnets, glass, ceramics, luminophores or metal halide lamps. As for Didymium, besides its reuse in NdFeB magnets, it can also be used in the manufacture of safety glasses for glass blowers, in photographic filters, as a calibration material for spectrometers and in the manufacture of the catalyst used in oil cracking.

To separate REEs from leachates, liquid-liquid extraction is often used. This technique relies on the partitioning of the ions between two immiscible phases: an aqueous phase or water-rich phase (the leachate from the NdFeB magnets) and a solvent phase or solvent-rich phase (also called organic phase). The solvent phase contains selective extractants, often dissolved in a suitable organic diluent. The ions of interest are extracted into the solvent phase, they can then be recovered in a clean aqueous phase using a similar technique called back-extraction.

Commercial acidic organophosphorus (HA) extractants are known to be effective for separation between REEs. For example, separation between Nd and Dy is possible using di(2-ethylhexyl) phosphate (HDEHP) from hydrochloric acid solutions. Additionally, the separation of adjacent REEs, in the periodic table, such as Nd and Pr is more efficient using bis-2,4,4-trimethylpentyl phosphinic acid (known under the brand name Cyanex^{®} 272). However, the extraction yield remains low. Mixtures of extractants were also considered to ensure efficient separation and high extraction yields. Nevertheless, acidic extractants often aggregate in the nonpolar organic phase and the REE complexes formed during extraction may therefore contain undissociated acid. Thus, the extraction of rare earth from a mixture including another rare earth is generally complex and requires the implementation of many steps. Indeed, after the liquid-liquid extraction, the REEs must be removed from the acidic extractant by a back-extraction, then the REEs recovered in the aqueous phase are precipitated, filtered and calcined.

Liquid-liquid extraction is nowadays the main process on an industrial scale for the separation of rare earths elements and can be carried out in a continuous process. Commercial processes are configured on the basis of a first liquid-liquid extraction circuit designed to separate REEs in a grouped manner from other impurities. Then, a second circuit that produces the REEs individually or mixed (usually 2 or 3) is implemented. In contrast to Eu²⁺ and Ce⁴⁺ which can change valence, the similarity of the degree of oxidation of the other REE (degree of oxidation of +III) requires a battery of several mixer-setters in series in the last separation circuit, especially for the production of the elements individually. For example, Rhodia's facility in La Rochelle (France) has more than 1500 mixer-settlers in series for the production of individual REEs. The extractants used are: HDEHP, 2-Ethylhexylphosphonic acid mono-2-ethylhexyl ester (HEHEHP or PC-88A), branched carboxylic acids (Versatic acid 10 and 9-11), tributyl phosphate (TBP) and trioctylmethylammonium chloride (Aliquat 336). However, the grouped extraction of REEs in the primary circuit by HDEHP interferes with the extraction of Fe, requiring a prior selective precipitation step. Additionally, the REE extraction reaction by HDEHP requires high acid consumption (≥4M) during protonation back-extraction of HDEHP dimers. Organophosphorus extractants such as TBP, HDEHP, generate complex secondary wastes (composed of phosphorus) requiring additional treatment steps (and a specific incinerator) compared to solvents composed only of carbon (C); oxygen (O); hydrogen (H) and nitrogen (N) where the secondary wastes are only incinerated with the correct amount of air and the combustion products are discharged directly to the atmosphere.

Additionally, during liquid-liquid extraction with known solvents, formation of a third phase (i.e. the splitting of the organic phase into two phases, a heavy viscous phase rich in metal-solvate and a light one rich in diluent) can occur and constitutes a major obstacle to efficient liquid-liquid extraction processes. It occurs at a high concentration of acid and metal in the solvent. This forces the operators to proceed in conditions where the concentration of acid and metal are lower than the limiting organic concentration (also called LOC), which limits the loading capacity of commercial solvents to values lower than 100 g.L⁻¹. Several methods are used to increase the LOC such as increasing the temperature and the polarity of the diluent. However, the extraction reaction for many systems is exothermic so increasing the temperature would increase the LOC of the solutes but also decrease the extraction efficiency. Similarly, increasing the polarity of the diluent for some systems would result in a strong interaction between the diluent and the extractant unfavorable to the extraction of REEs. Another method widely used to increase the LOC is the use of a phase modifier in the solvent such as N,N,-dihexyloctanamide (DHOA) in the N,N,N,N-Tetraoctyl-3-oxapentanediamide (TODGA)-dodecane system or TBP in the n-octyl(phenyl)-N,N-diisobutylcarbamoyl methylphosphine oxide (CMPO)-dodecane system in the TRUEX process. It is important to note that DHOA or any other modifier only increases the solubility of the acid and metal complexes in the solvent to avoid third phase formation but does not extract REEs.

All currently known methods involve high quantities of acids to be neutralized in the effluents, as well as a large amount of highly toxic molecules among extractants, diluents and modifiers. Extractants are mostly recycled, but they all have a small solubility to be dealt with in the effluent and products.

Recently, Chen et al., 2019, Green Chemistry, 21, 17, 4748-4756 has described the use of a green composition based on carboxylic acids and polyols to separate La and Ce.

Thus, the aim of the present invention is to overcome the drawbacks of the cited prior art, and more particularly, to provide a simple and economical method which enables extracting one or more rare earth metals from a raw solid material, and more particularly from a WEEE, said method being selective so as to separate several rare earth metals from each other, avoiding or at least reducing the use of toxic and/or aggressive reagents and/or solvents, and using smoother leaching conditions, thus reducing the risk of degradation of the equipment and/or safety, environmental and health issues. Another aim of the present invention is to provide a method which can be performed in a closed cycle so that the main products and/or solvents used in the method can be recycled.

### The method

A first object of the present invention is a method for extracting at least one first lanthanide element having a molecular weight M_{L1} (in g/mol) from a solid material comprising said first lanthanide element and one or more other element(s) selected from a second lanthanide element having a molecular weight M_{L2} (in g/mol), at least one waste element having a molecular weight M_{WE} (in g/mol), and mixture thereof, wherein:
- M_{WE} ≤ 100 g/mol, and
- when the other element is a second lanthanide element, eventually in mixture with a waste element, M_{L1} ≥ 154 g/mol and preferably M_{L1} ≥ 160 g/mol, and M_{L2} < 154 g/mol, and
wherein said method comprises at least the following steps:
i) preparing a leaching composition comprising an aqueous phase, at least one organic aprotic solvent, and at least one charged hydrotrope,
ii) mixing the leaching composition with the solid material so as to form a leachate solution comprising the first lanthanide element, and a solid residue comprising said one or more other element(s),
iii) separating the leachate solution from the solid residue.

The method of the present invention is simple, economical, enabling the extraction of at least one first lanthanide element from a solid material comprising other elements such as a second lanthanide element and/or waste elements such as iron, copper, etc...The method uses non-toxic, non-volatile, and low flashpoint reactants allowing eco-friendly and toxic effluent reduction in hydrometallurgy and recycling using smoother leaching conditions, thus reducing the risk of degradation of the equipment and/or safety, environmental and health issue. Said method enables extracting one or more lanthanide elements from a raw solid material, and more particularly from a WEEE and improves selectivity and efficacy of lanthanide elements extraction thanks to the leaching composition prepared in step i). The method of the present invention can be performed in a closed cycle so that the main reactants and solvents used in the method can be recycled to be reused in a further extracting method.

### The solid material

The present invention finds particular application in the treatment of natural and/or industrial waste for the production of lanthanide metals, either from concentrates of natural minerals rich in lanthanides, such as bastnasite, monazite, xenotime, apatite, lopanite, clays (ionic minerals), or concentrates obtained from the treatment of natural ores other than lanthanide-rich minerals such as concentrates of "urban mines" consisting of industrial and domestic post-consumer wastes containing lanthanides, and in particular, electronic equipment wastes or concentrates of scrap products of lanthanides.

The solid material can therefore be an ore or waste such as a WEEE or a permanent magnet (e.g. of the NdFeB type).

The mass concentration of the first lanthanide element in the solid material (e.g. before implementing the method of the present invention) can range from about 0.5% to about 30% by mass, and preferably from about 1% to about 10% by mass, with respect to the total mass of the solid material.

In the solid material, the first lanthanide element is preferably in the form of an oxide compound or a phosphate compound.

The second lanthanide element is different from the first lanthanide element.

The mass concentration of the second lanthanide element in the solid material (e.g. before implementing the method of the present invention) can range from about 1% to about 30% by mass, and preferably from about 18% to about 26% by mass, with respect to the total mass of the solid material.

The mass concentration of the waste element(s) in the solid material (e.g. before implementing the method of the present invention) can range from about 1% to about 70% by mass, and preferably from about 10% to about 40% by mass, with respect to the total mass of the solid material.

The waste element can be a transition metal or a metalloid such as a transition metal or a metalloid selected from iron, copper, cobalt, boron, nickel, aluminium, titanium, chromium, and vanadium, and is preferably iron.

In a first variant, the solid material comprises one or more waste elements as the other element(s).

The method thus aims at selectively separating the first lanthanide element from one or more waste elements.

According to that first variant, the first lanthanide element is preferably selected from lanthanum (La), praseodymium (Pr), neodymium (Nd), europium (Eu), dysprosium (Dy), and ytterbium (Yb).

In a second variant, the solid material comprises a second lanthanide element eventually in mixture with one or more waste element(s) as other element(s).

The method thus aims at selectively separating the first lanthanide element from the second lanthanide, and from one or more waste elements if present.

According to that second variant, the first lanthanide is preferably dysprosium (Dy) or ytterbium (Yb); and the second lanthanide element is preferably selected from lanthanum (La), praseodymium (Pr), neodymium (Nd), and europium (Eu).

In one preferred embodiment, the solid material comprises a mixture of a second lanthanide element and one or more waste element(s) as the other elements, and preferably a mixture of a second lanthanide element and iron.

M_{WE} is preferably such that 40 g/mol ≤ M_{WE} ≤ 95 g/mol, and more preferably 50 g/mol ≤ M_{WE} ≤ 80 g/mol.

M_{L1} and M_{L2} are preferably such that [M_{L1}] - [M_{L2}] ≥ 10 g/mol, and more preferably ≥ 15 g/mol.

### Step i)

### The leaching composition

The leaching composition is preferably a monophasic composition (i.e. only one phase). Indeed, thanks to the monophasic character, selective leaching is performed.

### The charged hydrotrope

A hydrotrope is a small organic molecule miscible in water which is used to dissolve hydrophobic compounds in aqueous solution by means other than micellar solubilization. Contrary to micelle- and vesicle-forming surfactants, hydrotropes do not have a critical micelle concentration (cmc) and a critical vesicle concentration (cvc), above which self-aggregation spontaneously starts to occur. In contrast to surfactants, hydrotropes do not aggregate in ordered structures. A hydrotrope can be non-charged (for example ethanol) or charged.

In the present invention, the hydrotrope is a charged hydrotrope. This charged character enables a better ion exchange.

In the invention, the expression "charged hydrotrope" means an hydrotrope which has at least one charged bond. In other words, the charged hydrotrope comprises a main charged organic molecule associated with a charged organic or inorganic counterion.

The charged hydrotrope of the present invention is preferably a cationic (positively charged) hydrotrope. In other words, it comprises a main negatively charged (or anionic) organic molecule associated with a positively charged organic or inorganic counterion (or cation).

The cationic hydrotrope can be selected from salts of a substituted benzoic acid, a unsubstituted benzoic acid, a substituted benzene sulfonic acid, and a unsubstituted benzene sulfonic acid.

The benzoic acid (respectively the benzene sulfonic acid) can be substituted with one or more groups selected from an alkyl group, an hydroxyl group, an aromatic group, an amine group, a nitro group, an alkenyl group, and an alkoxy group).

As an alkyl group, the methyl group is preferred.

The cationic hydrotrope can be a substituted benzoate, a unsubstituted benzoate, a substituted benzene sulfonate, or a unsubstituted benzene sulfonate, of a cation selected from alkali metal cations such as sodium, lithium, potassium, and ammonium.

In one preferred embodiment, the charged hydrotrope is selected from sodium salicylate, sodium xylene sulfonate, sodium cumene sulfonate, and sodium toluene sulfonate.

The charged hydrotrope can represent from about 20% to about 50% by mass, and preferably from about 35% to about 45% by mass, with respect to the total mass of the leaching composition.

### The organic aprotic solvent

The organic aprotic solvent is preferably of low polarity or of medium polarity. In others words, the organic aprotic solvent has preferably a dipolar moment (D) ranging from about 0.3 to about 2.5, and more preferably from about 1.0 to about 2.0.

In one preferred embodiment, the organic aprotic solvent is selected from ethers, esters, carbonates, and mixtures thereof.

As examples, ethyl acetate, diethylcarbonate, cyclopentylmethylether, 2-methyltetrahydrofuran, *γ*-valerolactone, or dihydrolevoglucosenone (Cyrene) can be used.

Esters, and in particular ethyl acetate, are preferred.

The organic aprotic solvent can represent from about 10% to about 40% by mass, and preferably from about 20% to about 30% by mass, with respect to the total mass of the leaching composition.

### The aqueous phase

The aqueous phase is preferably water.

It has advantageously a neutral pH, i.e. ranging from 6.5 to 7.5.

The aqueous phase can represent from about 20% to about 40% by mass, and preferably from about 35% to about 45% by mass, with respect to the total mass of the leaching composition.

### Step ii)

During step ii) the leaching composition as prepared in step i) is mixed with the solid material so as to form a leachate solution comprising the first lanthanide element.

Step ii) is preferably carried out by mixing the leaching composition with the solid material such that the solid material has a mass concentration ranging from about 1 g to about 20 g, and more preferably from about 1 g to about 10 g, with respect to 100 ml of the leaching composition.

Step ii) can be carried out at a temperature ranging from about 15°C to about 70°C, and preferably from about 20°C to about 50 °C.

More particularly, the temperature of step ii) ranges from about 15°C to about 30°C, and more preferably from about 18°C to about 25°C.

Step ii) is preferably carried out during a time ranging from about 1h to about 5h, and more preferably from about 2h to about 4h. When the time is less than 1h, step ii) does not allow to recover a sufficient amount of first lanthanide element. When the time is more than 5h, step ii) is not enough selective, in particular if the other element is a second lanhanide element.

During step ii), the first lanthanide element is selectively dissolved in the leaching composition so as to form a leachate solution comprising said first lanthanide element. The first lanthanide element is dissolved in the leachate solution at a rate greater than 85%, more preferably greater than 90%, and even more preferably greater than 95%.

By contrast, the second lanthanide element and/or waste element is dissolved in the leachate solution at a rate equal to or less than 25%, more preferably equal to or less than 20%, and even more preferably equal to or less than 15%.

Thus, substantially all of the first lanthanide element is selectively dissolved with respect to the second lanthanide element and/or the waste element.

In one preferred embodiment, the first lanthanide element is selected from Dy and Yb; and the other element(s) is(are) a second lanthanide element selected from La, Nd, Pr, and Eu, eventually in mixture with a waste element.

### Step iii)

Step iii) is carried out so as to separate the first lanthanide element from the other element(s) which remain in the solid residue.

Separation can be carried out by filtration.

At the end of step iii), a leachate solution free of solid residue and rich in first lanthanide element is obtained.

Thus, contrary to the hydrometallurgical processes of the state of the art which first proceed to the selective leaching of lanthanides with regards to iron, by leaching, thus obtaining a liquid mixture of lanthanides, and then proceed to the specific extraction of lanthanides from this liquid mixture, the method of the present invention, as soon as the leaching step i) is implemented, enables selectivity between lanthanides at the same time as the selectivity with regards to waste elements such as iron, on a solid mixture comprising a mixture of lanthanides and waste elements.

Therefore, contrary to the processes of the prior art which require the use of many reagents such as toxic extracting molecules and organic solvents, during a long, complex and expensive process, the process according to the invention is simple, fast and is environmentally friendly.

The leachate solution can then be processed according to step iv) and steps v) and vi) as mentioned below so as to obtain the first lanthanide element in a desired form such as an oxidized form.

### Step iv)

The method of the present invention can further comprise after step iii) a step iv) of adding a precipitating agent to the leachate solution so as to form a solid comprising said first lanthanide element.

The precipitating agent can be selected from oxalic acid, sodium hydroxide, ammonium hydroxide, sodium sulfate, and mixture thereof.

### Step.v)

The method of the present invention can further comprise after step iv) a step v) of separing the solid comprising said first lanthanide element from the remaining solution, for example by filtrating said solid.

### Step vi)

After step v), the method can further comprise a step vi) of calcining the solid comprising said first lanthanide element so as to form an oxidized form of the first lanthanide element.

This method is particularly useful for selective extraction of the first lanthanide element from a solid material comprising iron and a second lanthanide element as the other elements.

When the solid material used in step ii) comprises a first lanthanide element, a second lanthanide element, and at least one waste element such as iron, the solid residue obtained in step iii) comprises the second lanthanide element and the waste element.

In the second variant, i.e. when the the solid material comprises a second lanthanide element eventually in mixture with one or more waste element(s) as other element(s), the method can then further comprise after step iii), at least the following steps I), II) and III):
I) preparing a leaching composition comprising an aqueous phase, at least one organic aprotic solvent, and at least one charged hydrotrope,
II) mixing the leaching composition of step I) with the solid residue of step iii) so as to form a leachate solution comprising the second lanthanide element, and a solid residue comprising one or more other element(s),
III) separating the leachate solution from the solid residue.

Steps I), II) and III) enable to extract the second lanthanide element from the solid residue obtained in step iii).

Step I) has the same definition as step i).

The leaching composition, the aqueous phase, the organic aprotic solvent, and the charged hydrotrope are as defined in the present invention. This being said, the composition of the leaching composition prepared in step I) can be identical or different from the one of the leaching composition prepared in step i).

During step II) the leaching composition as prepared in step I) is mixed with the solid residue of step iii) so as to form a leachate solution comprising the second lanthanide element.

Step II) is preferably carried out by mixing the leaching composition with the solid residue of step iii) such that the solid residue has a mass concentration ranging from about 1 g to about 20 g, and more preferably from about 1 g to about 10 g, with respect to 100 ml of the leaching composition.

Step II) can be carried out at a temperature ranging from about 15°C to about 70°C, and preferably from about 20°C to about 50 °C.

More particularly, the temperature of step II) ranges from about 30°C to about 50°C, and more preferably from about 35°C to about 45°C.

Step II) is preferably carried out during a time ranging from about 1h to about 7h, and more preferably from about 3h to about 6h. When the time is less than 1h, step II) does not allow to recover a sufficient amount of second lanthanide element. When the time is more than 7h, step II) is not enough selective.

During step II), the second lanthanide element is selectively dissolved in the leaching composition so as to form a leachate solution comprising said second lanthanide element. The second lanthanide element is dissolved in the leachate solution at a rate greater than 85%, more preferably greater than 90%, and even more preferably greater than 95%.

By contrast, the waste element is dissolved in the leachate solution at a rate equal to or less than 25%, more preferably equal to or less than 20%, and even more preferably equal to or less than 15%.

Thus, substantially all of the second lanthanide element is selectively dissolved with respect to the waste element.

The second lanthanide element is preferably selected from La, Nd, Pr, and Eu.

Step III) is carried out so as to separate the second lanthanide element from the other element(s) which remain in the solid residue.

Separation can be carried out by filtration.

At the end of step III), a leachate solution free of solid residue and rich in second lanthanide element is obtained.

The leachate solution can then be processed according to step IV) and steps V) and VI), which have respectively the same definition as steps iv), v) and vi) but applied to the second lanthanide element, so as to obtain the second lanthanide element in a desired form such as an oxidized form.

In the first object of the present invention, the method leads to selective extraction of a first lanthanide element [steps i) to vi)], and optionally the selective extraction of a second lanthanide element [steps i) to iii), and steps I) to VI)], from a solid material.

The solid material can further comprise a third lanthanide element having a molecular weight M_{L3} such that M_{L3} ≥ 154 g/mol, preferably M_{L3} ≥ 160 g/mol, with M_{L3} < M_{L1}.

The third lanthanide element is different from the first and the second lanthanide element. The second and the third lanthanide elements can be present both or only one of them present in the solid material.

Said third lanthanide element acts as the first lanthanide previously defined in the present invention and is leached according to step ii) and separated from the solid residue according to step iii) so as to form a leachate solution enriched in first and third lanthanide elements. In others words, the leachate solution obtained in step iii) comprises the first and third lanthanide elements.

The method of the present invention can further comprise selectively extracting the first lanthanide element with respect to the third lanthanide element after step iii) according to the following steps:
a) mixing a dilution solution comprising an organic aprotic solvent as defined in the present invention and water, with the leachate solution comprising the first and third lanthanide elements obtained in step iii), so as to obtain a resulting biphasic composition comprising an organic-rich phase comprising the first lanthanide element, and an aqueous-rich phase comprising the third lanthanide element,
b) separating the two phases so as to recover the aqueous-rich phase comprising the third lanthanide element,
c) mixing the organic-rich phase comprising the first lanthanide element with an aqueous acidic solution so as to obtain a resulting biphasic composition comprising an aqueous-rich phase comprising the first lanthanide element (back extraction), and an organic-rich phase, and
d) separating the two phases so as to recover the aqueous-rich phase comprising the first lanthanide element.

Thus, thanks to the method of the present invention the same system (i.e. a composition comprising an charged hydrotrope, an organic aprotic solvent, and water) is used to perform leaching [step ii) with the leaching composition] as well as liquid-liquid extraction [steps a) and b) with the leachate solution and the dilution solution]

The dilution solution can comprise from about 20% to about 80% by mass of water, and preferably from about 50% to about 60% by mass of water, with respect to the total mass of the dilution solution.

The dilution solution can comprise from about 20% to about 80% by mass of organic aprotic solvent, and preferably from about 40% to about 50% by mass of organic aprotic solvent, with respect to the total mass of the dilution solution.

The mass ratio mass(dilution solution)/mass(leachate solution) ranges preferably from about 3,5 to about 5.

Step a) is preferably carried out during about 20 min to about 180 min, and preferably during about 30 min to about 60 min.

Step a) is preferably carried out at a temperature of about 20°C to about 30°C.

Step a) is preferably carried out by stirring or rotary stirring.

Step b) is preferably carried out by centrifugating.

In step c), the pH of the aqueous acidic solution can be adjusted by adding an acidic solution to water so as to form said aqueous solution, where the acidic solution is preferably selected from about 0.1 M to about 1 M acidic solutions, preferably from about 0.1 M to about 0.5 M acidic solutions, of hydrochloric acid, nitric acid and sulfuric acid.

In step c), the volume ratio V(organic-rich phase)/V(aqueous solution) ranges preferably from about 0.7 to about 1.3, and is more preferably equal to 1.

Step c) is preferably carried out during about 10 min to about 60 min, and preferably during about 20 min to about 30 min.

Step c) is preferably carried out at a temperature of about 20°C to about 30°C.

After step d), the aqueous-rich phase comprising the first lanthanide element can be processed according to the following step e) and steps f) and g), so as to obtain the first lanthanide element in a desired form such as an oxidized form.

### Step e)

The method of the present invention can further comprise after step d) a step e) of adding a precipitating agent to the aqueous-rich phase comprising the first lanthanide element so as to form a solid comprising said first lanthanide element.

The precipitating agent can be selected from oxalic acid, sodium hydroxide, ammonium hydroxide, sodium sulfate, and mixture thereof.

### Step f)

The method of the present invention can further comprise after step e) a step f) of separing the solid comprising said first lanthanide element from the remaining solution, for example by filtrating said solid.

### Step g)

After step f), the method can further comprise a step g) of calcining the solid comprising said first lanthanide element so as to form an oxidized form of the first lanthanide element.

Indeed, steps e), f) and g) are similar to steps iv), v) and vi) as defined above but applied to an aqueous-rich phase comprising the first lanthanide element instead of a leachate solution comprising the first lanthanide solution.

After step b), the aqueous-rich phase comprising the third lanthanide element can be processed according to step e') and steps f') and g') which have respectively the same definition as steps e), f) and g) but applied to the aqueous-rich phase comprising the third lanthanide element, so as to obtain the third lanthanide element in a desired form such as an oxidized form.

The first lanthanide element is preferably Yb and the third lanthanide element is preferably Dy.

The solid material can further comprise a fourth lanthanide element having a molecular weight M_{L4} such that M_{L4} < 154 g/mol, with M_{L4} < M_{L2}.

The fourth lanthanide element is different from the second, the third, and the fourth lanthanide elements. The second, the third, and the fourth lanthanide elements can be present together or only one of them or two of them present in the solid material.

Said fourth lanthanide element acts as the second lanthanide previously defined in the present invention so that the fourth lanthanide element remains in the solid residue obtained in step iii) with the second lanthanide element, and is leached according to step II) and separated from the solid residue according to step III) so as to form a leachate solution enriched in second and fourth lanthanide elements. In others words, the leachate solution obtained in step III) comprises the second and fourth lanthanide elements.

The method of the present invention can further comprise selectively extracting the second lanthanide element with respect to the fourth lanthanide element after step III) according to the following steps:
A) mixing a dilution solution comprising an organic aprotic solvent as defined in the present invention and water, with the leachate solution comprising the second and fourth lanthanide elements obtained in step III), so as to obtain a resulting biphasic composition comprising an organic-rich phase comprising the second lanthanide element, and an aqueous-rich phase comprising the fourth lanthanide element,
B) separating the two phases so as to recover the aqueous-rich phase comprising the fourth lanthanide element, and
C) mixing the organic-rich phase comprising the second lanthanide element with an aqueous acidic solution so as to obtain a resulting biphasic composition comprising an aqueous-rich phase comprising the second lanthanide element (back extraction), and an organic-rich phase, and
D) separating the two phases so as to recover the aqueous-rich phase comprising the second lanthanide element.

Thus, thanks to the method of the present invention the same system (i.e. a composition comprising an charged hydrotrope, an organic aprotic solvent, and water) is used to perform leaching [step II) with the leaching composition] as well as liquid-liquid extraction [steps A) and B) with the leachate solution and the dilution solution].

The dilution solution can comprise from about 20% to about 80% by mass of water, and preferably from about 21% to about 31% by mass of water, with respect to the total mass of the dilution solution.

The dilution solution can comprise from about 20% to about 80% by mass of organic aprotic solvent, and preferably from about 69% to about 79% by mass of organic aprotic solvent, with respect to the total mass of the dilution solution.

The mass ratio mass(dilution solution)/mass(leachate solution) ranges preferably from about 15 to about 20.

Step A) is preferably carried out by stirring or rotary stirring.

Step A) is preferably carried out during about 20 min to about 180 min, and preferably during about 30 min to about 60 min.

Step A) is preferably carried out at a temperature of about 20°C to about 30°C.

Step B) is preferably carried out by centrifugating.

In step C), the pH of the aqueous acidic solution can be adjusted by adding an acidic solution to water so as to form said aqueous solution, where the acidic solution is preferably selected from about 0.1 M to about 1 M acidic solutions, preferably from about 0.1 M to about 0.5 M acidic solutions, of hydrochloric acid, nitric acid and sulfuric acid.

In step C), the volume ratio V(organic-rich phase)/V(aqueous solution) ranges preferably from about 0.7 to about 1.3, and is more preferably equal to 1.

Step C) is preferably carried out during about 10 min to about 60 min, and preferably during about 20 min to about 30 min.

Step C) is preferably carried out at a temperature of about 20°C to about 30°C.

After step D), the aqueous-rich phase comprising the second lanthanide element can be processed according to step E) and steps F) and G) which have respectively the same definition as steps e), f) and g) but applied to the aqueous-rich phase comprising the second lanthanide element, so as to obtain the second lanthanide element in a desired form such as an oxidized form.

After step B), the aqueous-rich phase comprising the fourth lanthanide element can be processed according to step E') and steps F') and G') which have respectively the same definition as steps e), f) and g) but applied to the aqueous-rich phase comprising the fourth lanthanide element, so as to obtain the fourth lanthanide element in a desired form such as an oxidized form.

The second lanthanide element is preferably Eu and the fourth lanthanide element is preferably Pr, Nd, La or a mixture of least two of them.

Thus, the composition of the leaching solution is an important parameter for the selective leaching and/or the selective liquid-liquid extraction, of heavy lanthanides compared to light lanthanides and iron.

The method of the present invention is preferably free of extractants. Indeed, said extractants are toxic and expensive (TOA, HDEHP, di- and monoamides).

It is noted that the sequences of of steps I) to III) and steps a) to d) are independent, so that only one of them or both can be implemented after step iii).

Indeed, the steps implemented after step iii) depends on the number of lanthanides present in the solid material used in step ii) and their respective molecular weight.

The second, third, and fourth lanthanide elements are optional and can be present alone or as a combination of two or three lanthanides.

The solid material can further comprise a fifth lanthanide, etc...

Depending on the type of fifth lanthanide, it can be subjected to the appropriate sequence of steps as detailed above.

The method of the present invention can further comprise after step d) [respectively after step D)], a step h) [respectively a step H)] so as to adjust the organic-rich phase obtained (step also called composition adjustement step). This step aims at reforming/recreating the leaching composition as prepared in step i) [respectively in step I)].

Step h) [respectively a step H)] is preferably carried out by adding an adjustement composition comprising the appropriate amounts of charged hydrotrope and water, to the organic-rich phase.

The adjustement composition preferably comprises from about 40 to about 70% by mass of water, and from about 30% to about 60% by mass of charged hydrotrope, and preferably from about 50 to about 60% by mass of water, and from about 40% to about 50% by mass of charged hydrotrope, with respect to the total mass of the adjustement composition.

In one preferred embodiment, the mass ratio m(adjustement composition)/m(organic-rich phase) ranges from about 2 and 6.

Step h) [respectively a step H)] is preferably carried out at a temperature of about 20°C to about 30°C.

This step h) or H) enables working in a closed cycle and therefore recycling the solvent and charged hydrotrope used in the first cycle.

The method of the present invention can further comprise before step i), a preliminary step i0) of thermally treating the solid material under oxidizing conditions, so as to obtain the corresponding oxides of waste elements and/or lanthanides present in the raw solid material. Indeed, some waste electrical and electronic equipments contain non-oxidized lanthanides.

The method of the present invention is preferably implemented at atmospheric pressure.

A second object of the present invention is the use of the leaching composition as defined in the first object of the present invention for recycling lanthanide elements, and more particularly WEEE.

A third object of the present invention is the use of the leaching composition as defined in the first object of the present invention for the decontamination of effluents.

The present invention is illustrated in more detail in the examples below, but it is not limited to said examples.

### Examples

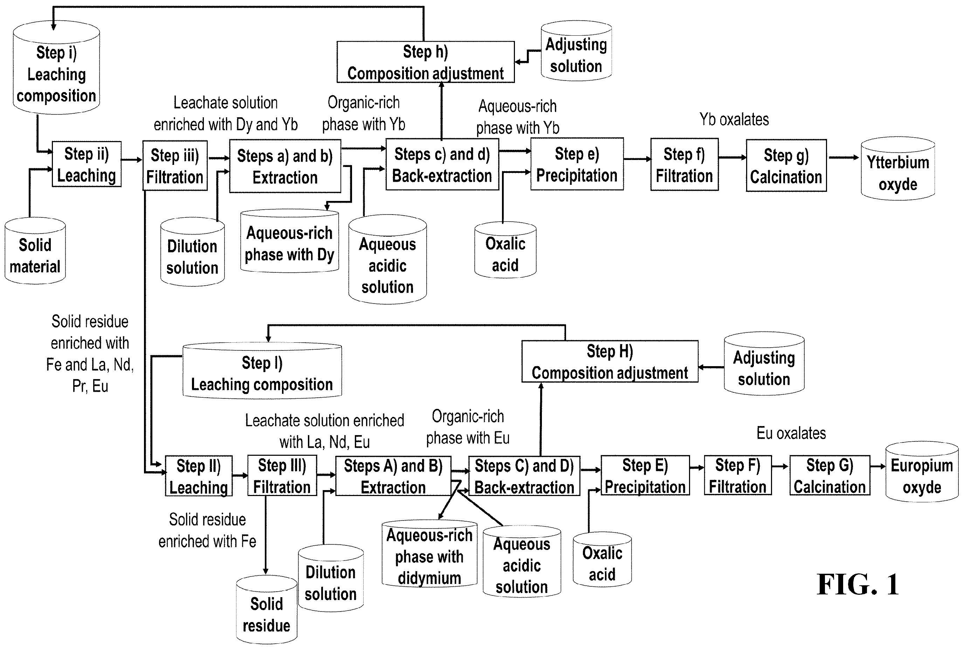

Figure 1 represents a flowsheet of the all-in-one process

More particularly, figure 1 shows the extraction process of a first and a second lanthanide elements according to a mode of implementation of the invention.

A solid material as defined in the present invention, and more particularly comprising La, Nd, Pr, Eu, Dy, Yb and Fe is leached [step ii)] for 3 hours at 20°C after preparing a leaching monophasic composition comprising for example ethyl acetate, water and sodium salicylate [(step i)]. After filtration according to step iii), a leachate solution enriched in Dy and Yb is obtained. This leachate solution can then be diluted with a dilution solution comprising for example ethyl acetate and water, in order to separate Yb from Dy [steps a) and b)]. Then, a back-extraction [step c)] is set up in order to recover the Yb in an aqueous phase [step d)], and then precipitate it [step e)] in the form of oxalates by adding oxalic acid. After filtration [step f)], the oxalates are then calcined [step g)] to recover a ytterbium oxide at the end of the method.

The solid residue obtained in step iii) is leached (step II)) for 5 hours at 40°C after preparing a leaching monophasic composition comprising for example ethyl acetate, water and sodium salicylate [step I)]. At the end of the filtration step [(step III)], a leachate solution enriched in Nd, Pr and Eu is obtained. This leachate solution can then be diluted with a dilution solution comprising for example ethyl acetate and water, in order to separate Eu from Didymium (Pr + Nd) [steps A) and B)]. Then, a back-extraction [step C)] is set up in order to recover the Eu in an aqueous phase [step D)], and then precipitate it [step E)] in the form of oxalates by adding oxalic acid. After filtration [step F)], the oxalates are then calcined [step G)] to recover a europium oxide (Eu₂O₃) at the end of the method.

The resulting solid residue is mostly Fe in the form of Fe₂O₃ which can be used in the production of pigments.

### Example 1 : process for extracting at least one first rare earth metal from permanent magnet powders according to a method of the invention

### 1.1 Step i) of preparing a leaching composition comprising an aqueous phase, at least one organic solvent, and at least one charged hydrotrope

A leaching monophasic composition comprising 40 wt% of water, 21 wt% of ethyl acetate as the organic solvent and 39 wt% of sodium salicylate as the charged hydrotrope was prepared.

### 1.2 Leaching step ii)

The leaching step ii) was performed in thermostatically controlled and stirred reactor to adjust the temperature.

As the solid material, a powder resulting from grinding of permanent magnets was used in the method of the present invention. The solid material has a composition as presented in the table 1 below:

**TABLE 1**

| **Elements** | **Dy** | **Fe** | **Nd** | **Pr** | **Other elements** |
|---|---|---|---|---|---|
| *wt %* | 2.5 | 63.5 | 25.2 | 3.5 | 5.3 |

10 mL of a leaching composition as prepared in item 1.1 was added to the reactor, and 0.2 g of a solid material was then added to the leaching composition.

The leaching step ii) was carried out for 3h at a temperature of 20°C.

The leachate solution was then filtered.

As a comparative example, the same method as described in item 1.2 was performed with a comparative leaching composition composed of a 5 M solution of nitric acid.

The molar concentrations of lanthanides and waste elements in the leachate solution and the comparative leachate solution were determined using an X-ray fluorescence spectrometer (XRF).

The table 2 below compares:
- the amount (in mole%) of a given element extracted with the leachate solution of the invention (100 x [molar concentration of a given element in the leachate solution]/[molar concentration of said given element in the solid material]), with
- the amount (in mole%) of a given element extracted with the comparative leachate solution (100 x [molar concentration of a given element in the comparative leachate solution]/[molar concentration of said given element in the solid material]).

**TABLE 2**

| **Elements** | **Amount of element (in mol%) extracted with a 5 M solution of nitric acid** | **Amount of element (in mol%) extracted with the leaching composition as prepared in 1.1** |
|---|---|---|
| **Nd** | 90.9 | 21 |
| **Pr** | 93.6 | 23.4 |
| **Dy** | 99.9 | 99.8 |
| **Fe** | 90.1 | 3.5 |

In the case of a leaching composition which is not part of the present invention (5 M nitric acid solution), leaching is complete for all the elements. So, it is a non-selective leaching system. With the leaching composition as defined in the present invention, Dy can be selectively extracted with respect to Nd, Pr and iron without the need to add a dedicated extractant, inducing lower costs and saving time and costs.

### 1.3 Other steps

The method according to the present invention produces a leachate solution enriched in Dy and a solid residue enriched in Nd, Pr and Fe.

After filtration, an oxalate of Dy is precipitated by adding 25 mmol/L of oxalic acid to the leachate solution, after adjusting the pH of the solution to a pH of 3. The precipitation is carried out at 20°C with constant stirring. 96mol% of the dysprosium was precipitated and dysprosium oxalates were formed. The leachate solution can be reused as a leaching composition for a new NdFeB oxide powder. In this way, rare earth losses in the precipitation step are also avoided because the remaining rare earths are fed back into the process feed.

The solid residue enriched in Nd, Pr and Fe is leached with a leaching composition as prepared in step 1.1 for 5 hours, at a temperature of 40°C and at a solid/liquid ratio of 1 : 50 (g.mL⁻¹). At the end of the filtration step, a leachate solution enriched in Nd and Pr is obtained. In this step, 80mol% of Nd and 84.3mol% of Pr are recovered selectively from the iron in the leachate solution. The didymium (mixture of Nd and Pr) is then precipitated with oxalic acid under the same operating conditions as the previous precipitation step. After filtration, 94mol% of Nd and 97.4mol% of Pr are precipitated as didymium oxalates. The didymium oxide can be obtained by calcination. The resulting solid residue contains mainly Fe.

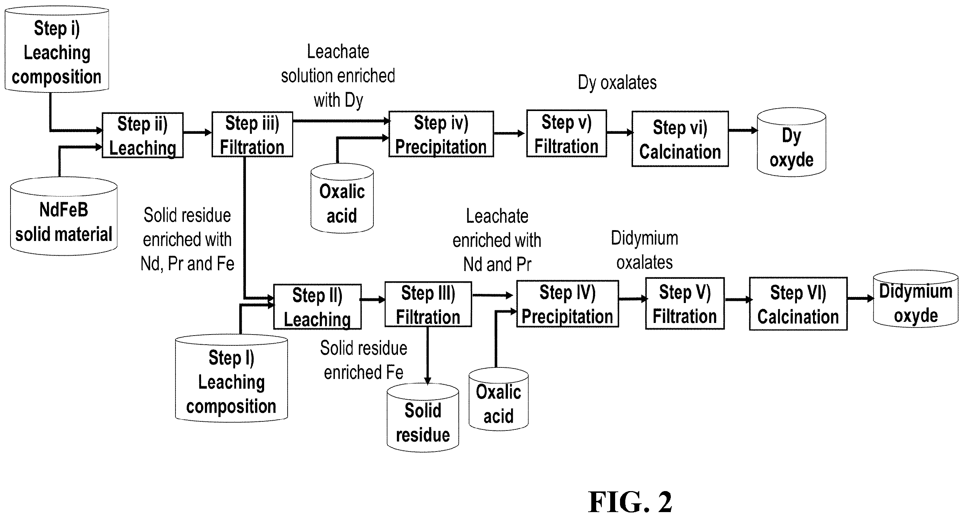

Figure 2 proposes a process diagram for the recycling of permanent magnets. In this case, only leaching step ii) is able to selectively separate the elements from each other (without the need of liquid-liquid extraction), which reduces the number of process stages.

## Claims

1. A method for extracting at least one first lanthanide element having a molecular weight M_{L1} (in g/mol) from a solid material comprising said first lanthanide element and one or more other element(s) selected from a second lanthanide element having a molecular weight M_{L2} (in g/mol), at least one waste element having a molecular weight M_{WE} (in g/mol), and mixture thereof, wherein:
- M_{WE} ≤ 100 g/mol, and
- when the other element is a second lanthanide element, eventually in mixture with a waste element, M_{L1} ≥ 154 g/mol and preferably M_{L1} ≥ 160 g/mol, and M_{L2} < 154 g/mol, and
wherein said method comprises at least the following steps:
i) preparing a leaching composition comprising an aqueous phase, at least one organic aprotic solvent, and at least one charged hydrotrope,
ii) mixing the leaching composition with the solid material so as to form a leachate solution comprising the first lanthanide element, and a solid residue comprising said one or more other element(s),
iii) separating the leachate solution from the solid residue.

2. The method according to claim 1, wherein the charged hydrotrope is a cationic hydrotrope selected from salts of a substituted benzoic acid, a unsubstituted benzoic acid, a substituted benzene sulfonic acid, and a unsubstituted benzene sulfonic acid.

3. The method according to claim 1 or claim 2, wherein the charged hydrotrope represents from 20% to 50% by mass, with respect to the total mass of the leaching composition.

4. The method according to any one of the preceding claims, wherein the organic aprotic solvent is selected from ethers, esters, carbonates, and mixtures thereof.

5. The method according to any one of the preceding claims, wherein the organic aprotic solvent represents from 10% to 40% by mass, with respect to the total mass of the leaching composition.

6. The method according to any one of the preceding claims, wherein the aqueous phase has a pH ranging from 6.5 to 7.5.

7. The method according to any one of the preceding claims, wherein the solid material is a WEEE or a permanent magnet.

8. The method according to any one of the preceding claims, wherein the waste element is a transition metal or a metalloid selected from iron, copper, cobalt, boron, nickel, aluminium, titanium, chromium, and vanadium.

9. The method according to any one of the preceding claims, wherein the solid material comprises one or more waste elements as the other element(s) and the first lanthanide element is selected from lanthanum (La), praseodymium (Pr), neodymium (Nd), europium (Eu), dysprosium (Dy), and ytterbium (Yb).

10. The method according to any one of claims 1 to 8, wherein the solid material comprises a second lanthanide element eventually in mixture with one or more waste element(s) as other element(s), the first lanthanide is dysprosium (Dy) or ytterbium (Yb), and the second lanthanide element is selected from lanthanum (La), praseodymium (Pr), neodymium (Nd), and europium (Eu).

11. The method according to any one of the preceding claims, wherein said method further comprises after step iii):
- a step iv) of adding a precipitating agent to the leachate solution so as to form a solid comprising said first lanthanide element,
- a step v) after step iv) of separing the solid comprising said first lanthanide element from the remaining solution, and
- a step vi) after step v) of calcining the solid comprising said first lanthanide element so as to form an oxidized form of the first lanthanide element.

12. The method according to any one of the preceding claims, wherein:
- the solid material further comprises a third lanthanide element having a molecular weight M_{L3} such that M_{L3} ≥ 154 g/mol, with M_{L3} < M_{L1}, and
- the leachate solution obtained in step iii) is enriched in first and third lanthanide elements, and
said method further comprises selectively extracting the first lanthanide element with respect to the third lanthanide element after step iii) according to the following steps:
a) mixing a dilution solution comprising an organic aprotic solvent as defined in the preceding claims and water, with the leachate solution comprising the first and third lanthanide elements obtained in step iii), so as to obtain a resulting biphasic composition comprising an organic-rich phase comprising the first lanthanide element, and an aqueous-rich phase comprising the third lanthanide element,
b) separating the two phases so as to recover the aqueous-rich phase comprising the third lanthanide element,
c) mixing the organic-rich phase comprising the first lanthanide element with an aqueous acidic solution so as to obtain a resulting biphasic composition comprising an aqueous-rich phase comprising the first lanthanide element, and an organic-rich phase, and
d) separating the two phases so as to recover the aqueous-rich phase comprising the first lanthanide element.

13. The method according to any one of the preceding claims, wherein the solid material comprises a second lanthanide element eventually in mixture with one or more waste element(s) as other element(s), and said method further comprises after step iii) at least the following steps I), II) and III):
I) preparing a leaching composition comprising an aqueous phase, at least one organic aprotic solvent, and at least one charged hydrotrope,
II) mixing the leaching composition of step I) with the solid residue of step iii) so as to form a leachate solution comprising the second lanthanide element, and a solid residue comprising one or more other element(s),
III) separating the leachate solution from the solid residue.

14. The method according to claim 13, wherein:
- the solid material further comprise a fourth lanthanide element having a molecular weight M_{L4} such that M_{L4} < 154 g/mol, with M_{L4} < M_{L2},
- the leachate solution obtained in step III) is enriched in second and fourth lanthanide elements, and
said method further comprises selectively extracting the second lanthanide element with respect to the fourth lanthanide element after step III) according to the following steps:
A) mixing a dilution solution comprising an organic aprotic solvent as defined in the preceding claims and water, with the leachate solution comprising the second and fourth lanthanide elements obtained in step III), so as to obtain a resulting biphasic composition comprising an organic-rich phase comprising the second lanthanide element, and an aqueous-rich phase comprising the fourth lanthanide element,
B) separating the two phases so as to recover the aqueous-rich phase comprising the fourth lanthanide element, and
C) mixing the organic-rich phase comprising the second lanthanide element with an aqueous acidic solution so as to obtain a resulting biphasic composition comprising an aqueous-rich phase comprising the second lanthanide element, and an organic-rich phase, and
D) separating the two phases so as to recover the aqueous-rich phase comprising the second lanthanide element.

15. Use of a leaching composition as defined in any one of claims 1 to 6, for recycling lanthanide elements, and more particularly WEEE.

16. Use of a leaching composition as defined in any one of claims 1 to 6, for the decontamination of effluents.
